# EUROPÄISCHE PATENTSCHRIFT

(11) **EP 0 774 814 B1**
(45) Veröffentlichungstag und Bekanntmachung des Hinweises auf die Patenterteilung: **14.08.2002**
(21) Anmeldenummer: 96114875.6
(22) Anmeldetag: 17.09.1996
(51) Int. Cl.: H02B 5/00

(54) **Baugruppe zur Schaffung einer elektrischen Hochspannungsstation**
Element for providing a high voltage station
Elément pour fermer un poste à haute tension

(30) Priorität: 20.11.1995 IT MI952388
(43) Veröffentlichungstag der Anmeldung: 21.05.1997
(73) Patentinhaber: ABB Trasmissione & Distribuzione S.p.A., 20135 Milano (IT)
(72) Erfinder: Granata, Fulvio, 20077 Melegnano (IT); Malaguti, Massimo, 20077 Dresano (IT); Sfondrini, Libero, 20075 Lodi (IT)
(74) Vertreter: Modiano, Guido, Dr.-Ing.

(56) Entgegenhaltungen:
- DE-A- 1 940 215
- FR-A- 1 146 619
- US-A- 2 238 636
- PATENT ABSTRACTS OF JAPAN vol. 16, no. 392 (E-1251), 20. August 1992 & JP 04 127807 A (MEIDENSHA CORP.), 28. April 1992

## Beschreibung

Die Erfindung betrifft eine Baugruppe für eine elektrische Hochspannungsstation.

Eine Baugruppe für eine elektrische Station ist aus DE 19 40 215 A bekannt. Die Station besteht aus Transformatoren Isolatoren,Verbindungskontakten, Schaltern. Ein erster isolator, der eine Betätigungsstange aufnimmt, und ein zweiter Isolator, der eine Unterbrechungskammer enthält sind so angeordnet, daß sie einen Rechtwinkel bilden.

Es sind weitere elektrische Stationen oder Umspannstationen bekannt geworden, die aus einer Dreiereinheit von Schaltern, die mit einer Dreiereinheit von Messtransformatoren kombiniert sind, und aus weiteren aus der Technik bekannten Bestandteilen bestehen.

Diese bekannten elektrischen Stationen mit Freiluftisolierung bestehen in der Regel aus stabförmigen Isolatoren, die Isolierkörper, Schalter, Trennschalter, Führungsschienen, Messtransformatoren, Ableiter, feste Kontakte und bewegliche Kontakte enthalten oder tragen.

Für hohe elektrische Spannungen, denen diese Bauteile ausgesetzt sind, nimmt der ganze aus einer dreifachen Poleinheit bestehende Aufbau derartige Abmessungen an, dass ein strassen- bzw. schienengebundener Transport der zur Schaffung einer elektrischen Umspannstation vorgesehenen Baugruppe unmöglich wird.

Die Notwendigkeit, die Baugruppe der elektrischen Station in einzelne Bestandteile zu zerlegen, um den strassen- bzw. schienengebundenen Transport zu ermöglichen, weist jedoch den Nachteil auf, dass die Montage- und Einstellarbeiten am Aufstellungsort der elektrischen Umspannstation erneut vorgenommen werden müssen.

Ein weiterer Nachteil der bekannten Stationen ist darin zu sehen, dass der Zusammenbau aller Geräte vor Ort vorgenommen werden muss und daher zusätzliche Zeit aufgebracht werden muss. Oft müssen die Arbeiten bei ungünstigen Wetterbedingungen ausgeführt werden und ausserdem sind die technischen Prüfungen durch Fachleute durchzuführen, die sich vor Ort begeben müssen.

Will man eine elektrische Prüfung der Anlage vor Ort vermeiden, so ist es ausserdem aus Sicherheitsgründen notwendig, überdimensionierte Isolierungsabstände und daher eine über das übliche Mass hinausgehende allgemeine Grösse der Station vorzusehen. Das alles führt wiederum zu zusätzlichen Kosten.

Der Erfindung liegt die Aufgabe zugrunde, die zum bisherigen Stand der Technik gehörenden Nachteile zu beseitigen und es wird zur Lösung dieser Aufgabe eine Baugruppe für eine sehr kompakte elektrische Umspannstation nach dem Baukastenprinzip vorgeschlagen, wobei der Zusammenbau sämtlicher elektrischer Ausrüstungen, und zwar der Isolatoren, Schalter, Trennschalter, Schienen, Messtransformatoren und elektrischen Kontakte, mit sämtlichen Steuereinrichtungen im Werk erfolgen kann, und ausserdem alle mechanischen und elektrischen Prüfvorgänge der Anlage im Herstellerwerk vorgenommen werden können und der strassen- bzw. schienengebundene Transport der Baugruppe für die elektrische Umspannstation in zusammengebautem Zustand möglich ist, so dass sich die Umspannstation am Einsatzsort rasch aufstellen lässt, und zwar ohne Beeinträchtigung der zuvor im Werk eingestellten elektrischen Eigenschaften.

Diese Aufgabe wird erfindungsgemäss durch eine Baugruppe für eine elektrische Station mit den Merkmalen des Anspruchs 1 gelöst.

Als besonders vorteilhaft erweist sich dabei die Tatsache, dass eine so ausgeführte Baugruppe mit einem Stützgerüst in Wirkverbindung steht, das von einer Transportstellung in eine Arbeitslage und umgekehrt bewegt werden kann.

Mit einer erfindungsgemäss ausgebildeten und die Form eines Fertigbauteiles aufweisenden Baugruppe für eine elektrische Station lassen sich sämtliche mechanischen und elektrischen Vorprüfungen im Herstellerwerk vornehmen.

Das Positionieren der nach einem Baukastenprinzip hergestellten Baugruppe kann bereits während des Zusammenbaues im Werk unter Berücksichtigung der besonderen dielektrischen Anforderungen der Umspannstation erfolgen, so dass bei der Endmontage der Baugruppe am Anwendungsort keine Sicherheitsabstände mehr beachtet werden müssen.

Die Aufstellung der aus Fertigbauteilen bestehenden Baugruppe für die elektrische Umspannstation lässt sich daher rasch am Anwendungsort vornehmen, wo die aufwendigen, früher unumgänglichen Betriebsprüfungen nicht mehr notwendig sind. Die Baugruppe kann (wegen ihrer kleineren Abmessungen beim Transport) entweder mit schienen- oder mit strassengebundenen Beförderungsmitteln transportiert werden.

Da sämtliche mechanischen und elektrischen Eigenschaften vorab im Werk gemessen und geprüft worden sind, ist es nicht mehr erforderlich, aufwendige Prüfungen und Messungen durch Fachleute, zum Beispiel am Anwendungsort der elektrischen Umspannstation durchführen zu lassen, so dass sich hinsichtlich der Fertigungskosten eine beträchtliche Ersparnis erzielen lässt.

Der von der Erfindung vorgeschlagene Gegenstand wird nun anhand einer in den beiliegenden Zeichnungen nur beispielsweise dargestellten Ausführungsform näher beschrieben.

Es zeigen:
Figur 1 eine Ansicht der nach der Erfindung vorgeschlagenen, durch einen Stützrahmen getragenen Baugruppe für eine elektrische Umspannstation;
Figur 2 die Baugruppe für eine elektrische Station nach Figur 1 mit einem, zum Transport durch ein Beförderungsmittel zusammengefalteten Stützgerüst;
Figur 3 die erfindungsgemäss ausgelegte, auf einem zusammenfaltbaren Stützgerüst angeordnete und mit einer Verteilersäule versehene Baugruppe für eine Umspannstation;
Figur 4 eine Ansicht der erfindungsgemäss für eine elektrische Station ausgelegten, von einem zusammenfaltbaren Stützgerüst getragenen und mit schwenkbaren Verteilersäulen ausgerüsteten Baugruppe;
Figur 5 eine erfindungsgemäss für eine elektrische Umspannstation ausgelegte, von einem zusammenfaltbaren Stützgerüst getragene Baugruppe, die in Bezug auf die Verteilersäulen senkrecht verschiebbar ist;
Figur 6 eine Baugruppe für eine Umspannstation gemäss Figur 5, wobei die Möglichkeit dargestellt ist, die Verteilersäulen nach unten zu verschwenken;
Figur 7 und 8 jeweils eine Vorderansicht und eine Ansicht von oben einer weiteren Ausführungsform einer Baugruppe für eine elektrische Umspannstation, bei der die Isolatoren Winkel bilden und auf einem in einer waagerechten Ebene beweglichen Gerüst angeordnet sind;
Figur 9 und 10 jeweils eine Vorderansicht und eine Ansicht von oben der Baugruppe der elektrischen Umspannstation, die auf einem beweglichen Gerüst angeordnet ist, das in Bezug auf die Versorgungs- und Verteilersäulen teilweise verschoben ist;
Figur 11 und 12 jeweils eine Vorderansicht und eine Ansicht von oben der Verteiler- und Versorgungssäulen mit vollständig ausgezogenem und beweglichem Gerüst; und
Figur 13 die Baugruppe gemäss den Figuren 9 bis 12, die auf einem Fahrzeug, z.B. auf der Ladepritsche eines Lastwagens oder eines Anhängers angeordnet ist.

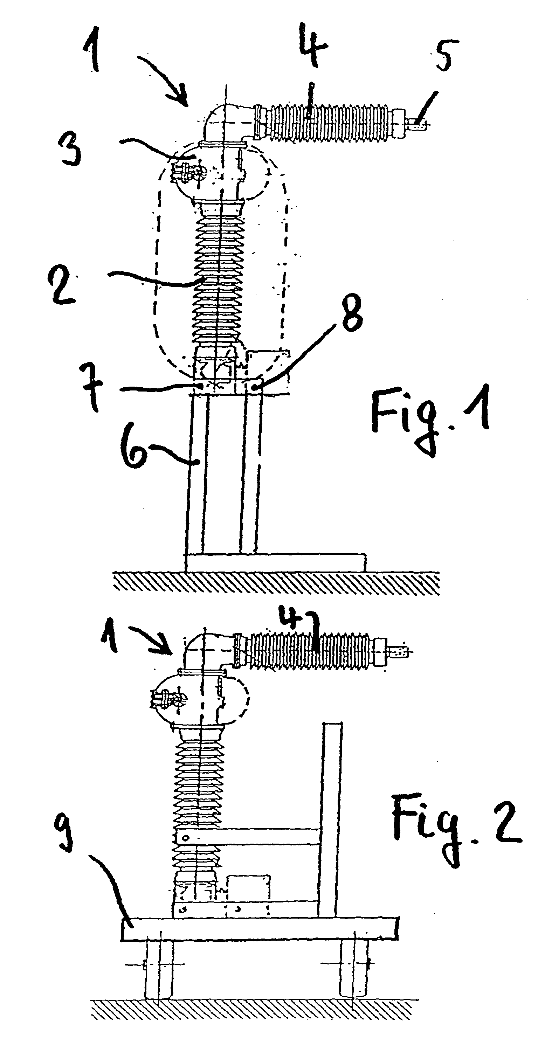

Die in Figur 1 dargestellte Baugruppe 1 einer aus einer Dreiereinheit bestehenden und aus nebeneinander angeordneten Elementen gebildete Umspannstation, besteht aus einem Isolator 2, der zum Beispiel eine Betätigungsstange aufnimmt. An der Oberseite nimmt der Isolator 2 einen Messtransformator 3 auf, dem sich ein rechtwinklig zum Isolator 2 angeordneter Isolator 4 anschliesst, der die Unterbrechungskammer enthält und mit dem Isolator 2 einen Winkel bildet. An seinem freien Ende weist der Isolator 4 einen mit 5 bezeichneten Verbindungskontakt auf.

Es ist besonders vorteilhaft, dass die Dreiereinheit der Elemente, aus denen die Baugruppe der Unterstation besteht, durch eine Stütze 6 gehalten wird. In vorteilhafter Weise ist die Stütze 6 nach dem Lockern einer Schraube 8 oder einem ählichen Mittel um einen Drehpunkt 7 schwenkbar.

Die in Figur 1 in Gebrauchsstellung gezeigte Baugruppe 1 der Station kann daher kleinere Abmessungen aufweisen, da das Stützgerüst 6 - wie in Figur 2 dargestellt - zusammenfaltbar ist und in dem neben dem Isolator 2 und unterhalb des Isolators 4 gebildeten Raumes unterbringbar ist. Dadurch können die Gesamtabmessungen der im Herstellerwerk montierten Baugruppe der elektrischen Umschaltstation 1 weiter reduziert werden, so dass die Baugruppe zum Beispiel mit einem Eisenbahnwagen oder Anhänger 9 transportiert werden kann.

Am endgültigen Verwendungsort der Baugruppe der elektrischen Umspannstation 1 genügt es dann, die Station 1 vom Transportmittel 9 zu heben, das Stützgerüst 6 um den Zapfen 7 zu schwenken und das Gerüst mit Hilfe des Bolzens oder der Schraube 8 festzuspannen.

Es wird darauf aufmerksam gemacht, dass aufgrund der Tatsache, dass die beiden Isolatoren 2 und 4 nicht geradlinig untereinander, sondern unter Bildung eines Winkels angeordnet sind, in Gebrauchsstellung der Baugruppe der elektrischen Station 1 eine beträchtliche Verminderung der Bauhöhe der Station erzielt wird. Dank der Möglichkeit, das Stützgerüst 6 in Bezug auf die Baugruppe der elektrischen Umspannstation - wie in Figur 2 dargestellt - zu verschwenken, werden die Abmessungen der elektrischen Umspannstation weiter reduziert, wobei der Transport einer vollständig vormontierten Baugruppe 1 auf einem Transportmittel 9 möglich wird, das sowohl schienen- als auch strassengebunden sein kann.

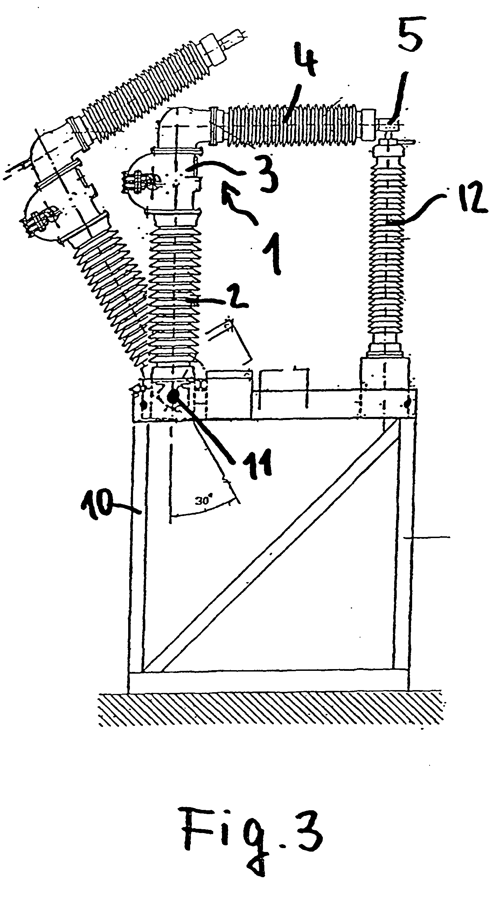

Figur 3 zeigt eine Baugruppe für eine elektrische Umspannstation 1, bei der die Isolatoren 2 und 4 so angeordnet sind, dass sie einen Winkel einschliessen und etwa in der Nähe der Schnittstelle der beiden Isolatoren einen Messtransformator 3 zwischen sich aufnehmen.

In dem zerlegbaren und faltbaren Stützgerüst 10, ist die Baugruppe 1 um den in der Nähe des Fusses des Isolators 2 vorgesehenen Drehpunkt 11 schwenkbar gelagert.

Dadurch kann der am Ende des Isolators 4 vorgesehene Kontakt 5 mit einem an einer Isolier- und Verteilungssäule 12 vorgesehenen Kontakt in bzw. ausser Eingriff kommen.

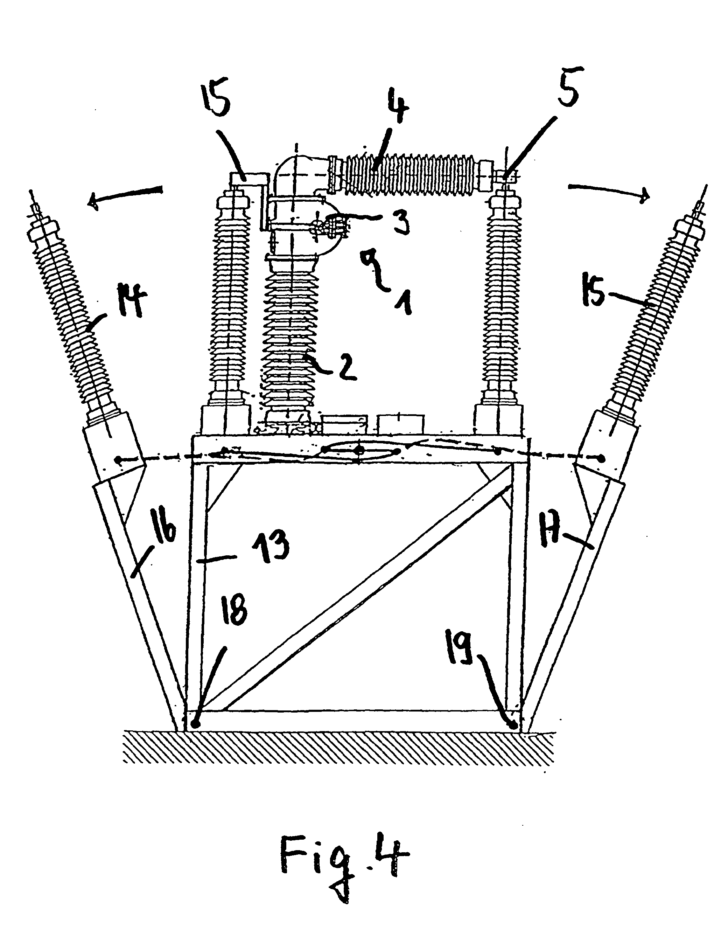

In Figur 4 ist eine erfindungsgemäss für eine elektrische Umspannstation 1 ausgelegte Baugruppe dargestellt, die aus einem Isolator 2, einem Messtransformator 3 sowie einem Isolator 4 besteht.

In dem in Figur 4 gezeigten Beispiel ist die für die elektrische Station 1 vorgesehene Baugruppe fest mit einem abnehmbaren Stützgerüst 13 verbunden und es ist ausserdem vorgesehen, dass die Säulen 14 und 15 (die mit dem Kontakt 5 des Isolators 4 oder mit einem Kontat des Transformators 3 in bzw. ausser Eingriff gebracht werden können) von Rahmen 16 und 17 getragen werden und um Zapfen 18 und 19 schwenkbar gelagert sind, die im unteren Teil des Stützgerüstes 13 angeordnet sind.

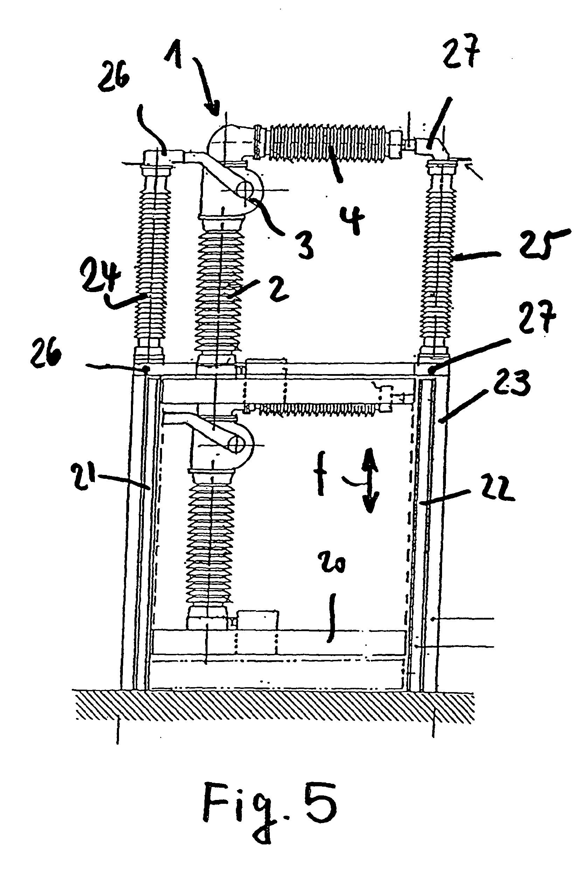

In Figur 5 ist eine Baugruppe für eine elektrische Umspannstation 1 dargestellt, die wiederum aus einem Isolator 2 und einem Isolator 4 besteht und so angeordnet sind, dass sie einen Winkel bilden, wobei zwischen den Isolatoren 2, 4 ein Transformator 3 angeordnet ist.

Die Bauteile 2, 3 und 4 werden von einer Grundplatte 20 getragen, die entlang von Führungen 21 und 22 eines Stützgerüstes 23 in Pfeilrichtung f nach oben und nach unten bewegbar ist. Die die Verteilersäulen 24 und 25 bildenden Isolatoren weisen Verteilungskontakte 26 und 27 an ihrer Oberseite auf.

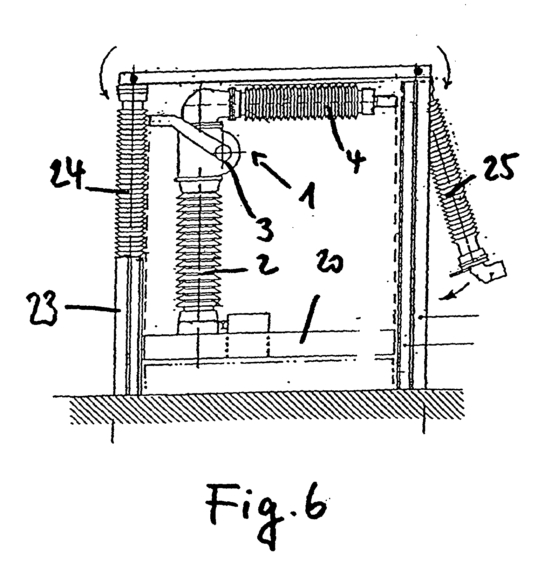

Die Verteilersäulen 24, 25 sind mit Hilfe von Zapfen 26 und 27 gelagert, so dass die Verteilungssäulen 24 und 25 der Isolatoren - wie in Figur 6 dargestellt - nach unten schwenkbar sind.

Der Figur 6 ist auch zu entnehmen, dass sowohl das Stützgerüst 23 als auch der aus den Isolatoren 2 und 4, dem Messtransformator 3 und den Verteilungssäulen 24, 25 bestehende Bauteil 1 für den Transport äusserst kleine Abmessungen aufweisen.

Auch die in Figur 6 dargestellte Baugruppe der elektrischen Umspannstation 1 wird vollständig im Werk vormontiert.

Nach Ankunft am Bestimmungsort genügt es daher, das Stützgerüst 23 aufzustellen. Danach wird die Grundplatte 20 gehoben, um die Dreiereinheit der Bestandteile 2, 3, 4 in der in Figur 5 dargestellten Gebrauchsstellung zu bringen und schliesslich werden die Säulen 24 und 25 nach oben verschwenkt und in der Stellung festgespannt, die der im Herstellerswerk vorgegebenen Gebrauchsstellung entspricht.

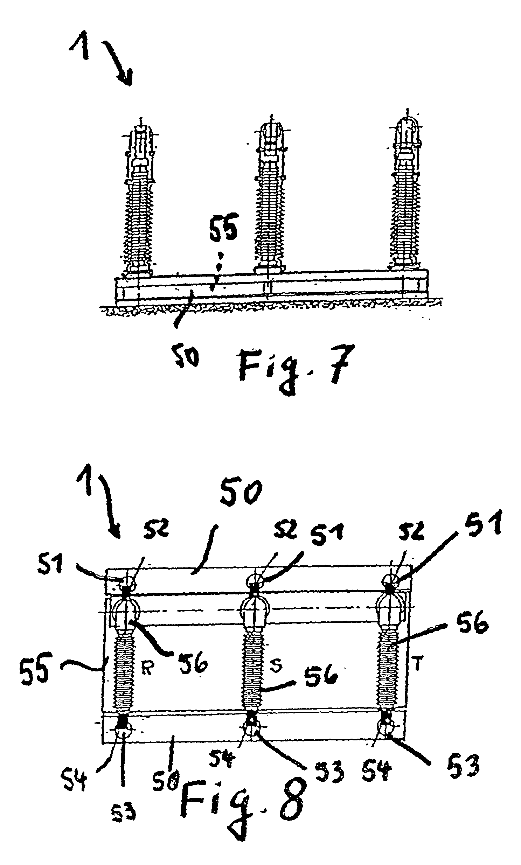

Die in den Figuren 7 bis 12 dargestellte Baugruppe für die elektrische Umspannstation 1 besteht im wesentlichen aus einem Rahmen 50. Der in einer waagerechten Ebene liegende Rahmen 50 nimmt die Versorgungssäulen 51 mit den entsprechenden Kontakten 52 auf, während die Verteilersäulen 53 mit den entsprechenden Kontakten 54 am gegenüberliegenden Träger des Rahmens 50 angeordnet sind. Zwischen den Trägern des Rahmens 50 ist ein fahrbares Gestell 55 vorgesehen, das sämtliche in einem Winkel angeordneten und insgesamt mit 56 bezeichneten Isolatoren aufnimmt, die zur Zuführung eines schematisch mit R, S und T angedeuteten Stroms vorgesehen sind.

In den Figuren 7 und 8 ist das Fahrgestell 55 vollständig im Rahmen 50 eingefahren, so dass sich die Kontakte 52 und 54 miteinander in Eingriff befinden.

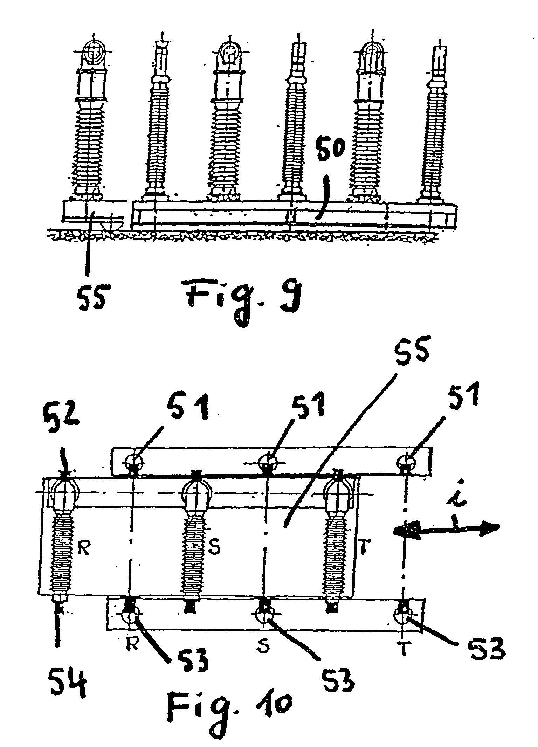

In den Figuren 9 und 10 ist das Fahrgestell 55 in Bezug auf den Rahmen 50 so verschoben, dass die Kontakte 52 und 54 nicht mehr mit den Versorgungssäulen 51 und 53 in Eingriff stehen und sich daher der Zustand der Stromsperre einstellt. Um eine Trennung vorzunehmen bzw. die Stromzufuhr zu ermöglichen, genügt es, wie insbesondere der Figur 10 zu entnehmen ist, das Fahrgestell 55 in den Pfeilrichtungen (i) zu bewegen, damit sich mit einer in einer waagerechten Ebene erfolgenden Verschiebung eine Trennung vornehmen lässt bzw. eine Verbindung herstellbar ist, die die elektrische Energieübertragung ermöglicht.

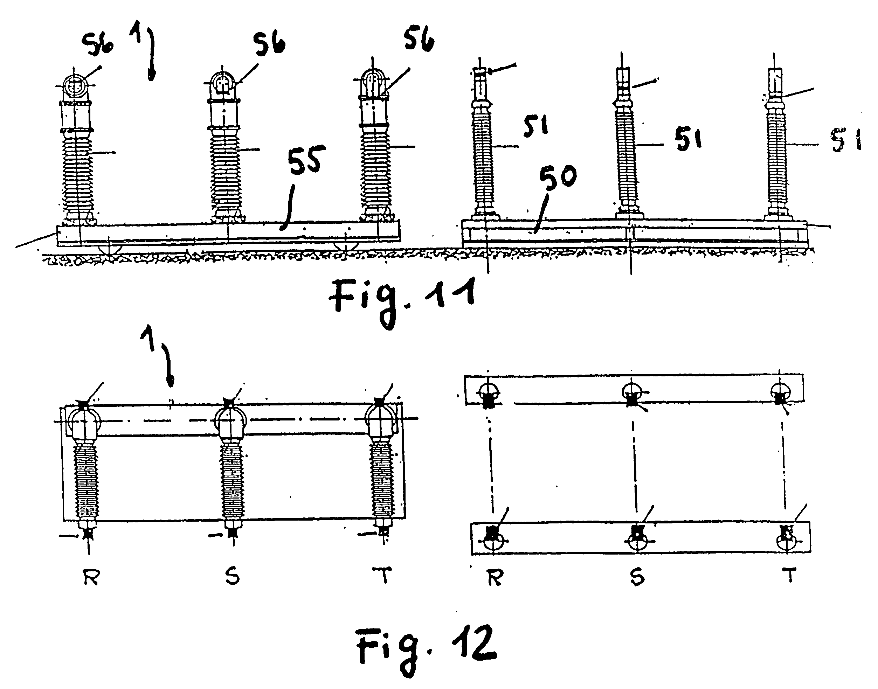

In den Figuren 11 und 12 ist die gesamte Umspannstation 1 jeweils in einer Vorderansicht und in einer Ansicht von oben dargestellt.

Das Fahrgestell 55 ist hier aus dem, die Stromversorgungs- bzw. Verteilungsisolatoren 51 aufnehmenden Rahmen 50 herausgezogen.

Dank der Möglichkeit, das Fahrgestell 55 aus dem Rahmen 50 herauszuziehen, kann das Fahrgestell 55 gemeinsam mit den Isolatoren und Transformatoren 56 vollständig ausgewechselt werden, was bei Wartungsarbeiten oder beim Auswechseln von fehlerhaften elektrischen Bauteilen von besonderem Vorteil ist.

Sollte die Reparatur der auf dem Fahrgestell 55 angeordneten Elemente 56 eine längere Zeit in Anspruch nehmen, so ist es auch möglich das ganze Fahrgestell 55 rasch auszuwechseln und dadurch die Unterbrechung der Versorgung der Stromverbraucher auf eine sehr kurze Zeit zu beschränken.

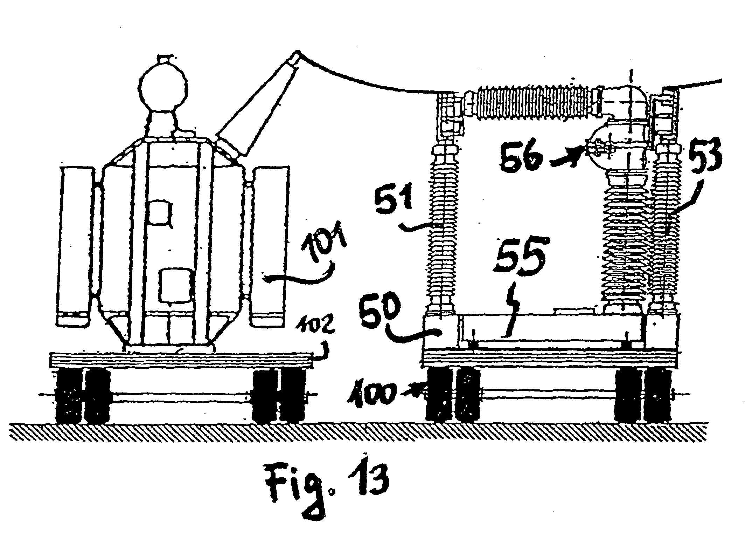

In Figur 13 ist die Baugruppe der mit den Bezugszeichen 50, 51, 53, 55 und 56 bezeichneten Unterstation in vorteilhafter Weise auf der Ladepritsche eines Kraftfahrzeuges 100, z.B auf der Ladepritsche eines Lastwagens oder eines Anhängers, angeordnet. Wird auf einem Transportfahrzeug 102 auch gleichzeitig ein Transformator 101 vorgesehen, so lässt sich eine Baugruppe für eine sich in Gebrauchs- und in Transportstellung befindliche Umspannstation schaffen, die in Gebieten eingesetzt werden kann, in denen keine Aufstellung einer ortsfesten Umspannstation oder nur ein zeitweiliger Einsatz vorgesehen ist.

## Patentansprüche

1. Baugruppe für eine aus einer Dreiereinheit gebildet aus Messtransformatoren (3), Isolatoren (2, 4), Verbindungskontakten (5), Schaltern und Isolatoren, bestehende elektrische Umspannstation (1), wobei die Isolatoren (2, 4) zur Verbindung mit einer Versorgungsleitung und einer Verteilungsleitung vorgesehen sind.

2. Baugruppe für eine elektrische Umspannstation nach Patentanspruch 1, **dadurch gekennzeichnet, dass** die Dreiereinheit mit den im Winkel angeordneten Isolatoren (2, 4) mit einem Stützgerüst (6) in Wirkverbindung steht, das von einer Ruhestellung (Figur 2) in eine Arbeitsstellung (Figur 1) bewegt werden kann.

3. Baugruppe für eine elektrische Umspannstation nach Patentanspruch 1, **dadurch gekennzeichnet, dass** das Stützgerüst (13) Isolier- und Stromverteilungssäulen (14, 15) aufnimmt, die im Stützgerüst (13) so gelagert sind, dass sie von einer Arbeitsstellung in eine Ruhestellung verschwenkt werden können.

4. Baugruppe für eine elektrische Umspannstation nach Patentanspruch 1, **dadurch gekennzeichnet, dass** die die elektrische Station (1) bildenden Bauteile (2, 3, 4) von einer Grundplatte (20) getragen werden, die in Bezug auf ein Stützgerüst (23) entlang von Führungen (21, 22) nach oben und nach unten beweglich ist.

5. Baugruppe für eine elektrische Umspannstation nach Patentanspruch 1, **dadurch gekennzeichnet, dass** die Verteilersäulen (24, 25) mit Hilfe von Zapfen gelagert sind, die das Schwenken der Säulen (24, 25) von oben nach unten und umgekehrt ermöglichen.

6. Baugruppe für eine elektrische Umspannstation nach Patentanspruch 1, **dadurch gekennzeichnet, dass** der Fuss des Isolators (2) mit dem Stützgerüst (10) gelenkig verbunden ist, so dass der Isolator (2), der Transformator (3) und der Isolator (4) in Bezug auf das Gerüst (10) verschwenkbar sind.

7. Baugruppe für eine elektrische Umspannstation nach Patentanspruch 1, **dadurch gekennzeichnet, dass** die Stromversorgungs- bzw. Verteilungssäulen (51, 53) von einem Stützrahmen (50) getragen sind und dass im Rahmen (50), zwischen den Verteiler- und Versorgungssäulen (51, 53) ein fahrbares Gestell (55) vorgesehen ist, das die Isolatoren (56) sowie den Messtransformator trägt.

8. Baugruppe für eine elektrische Umspanntation nach Anspruch 7, **dadurch gekennzeichnet, dass** das Fahrgestell (55) gegenüber dem die Versorgungs- und Verteilersäulen (51) aufnehmenden Rahmen (50) gesteuert (i) und verfahrbar ist.

9. Baugruppe für eine elektrische Umspannstation nach Patentanspruch 1, **dadurch gekennzeichnet, dass** die Baugruppe für die Umspannstation auf der Ladepritsche eines Fahrzeuges (100) aufliegt.

## Claims

1. Module for an electrical transformer station (1) which is formed from a triple unit and is composed of measuring transformers (3), insulators (2, 4), connecting contacts (5), switches and insulators, the insulators (2, 4) being provided for connection to a supply line and a distribution line, and a measuring transformer (3), which is adjoined by a second insulator (4) which is arranged at right angles to a first insulator (2) and contains the interruption chamber, being accommodated at one end of the first insulator (2) which, for example, accommodates an actuating rod.

2. Module for an electrical transformer station according to Patent Claim 1, **characterized in that** the triple unit with the insulators (2, 4) arranged at an angle is operatively connected to a support frame (6) which can be moved from a position of rest (Figure 2) into a working position (Figure 1).

3. Module for an electrical transformer station according to Patent Claim 1, **characterized in that** the supporting frame (13) holds insulating and power-distributing pillars (14, 15) which are mounted in the supporting frame (13) in such a way that they can be pivoted from a working position into a position of rest.

4. Module for an electrical transformer station according to Patent Claim 1, **characterized in that** the components (2, 3, 4) which form the electrical station (1) are supported by a base plate (20) which can be moved upward and downward with respect to the supporting frame (23) along guides (21, 22).

5. Module for an electrical transformer station according to Patent Claim 1, **characterized in that** the distributor pillars (24, 25) are mounted using tappets which permit the pillars (24, 25) to pivot from the top to the bottom and vice versa.

6. Module for an electrical transformer station according to Patent Claim 1, **characterized in that** the base of the insulator (2) is connected to the supporting frame (10) in an articulated fashion so that the insulator (2), the transformer (3) and the insulator (4) can be pivoted with respect to the frame (10).

7. Module for an electrical transformer station according to Patent Claim 1, **characterized in that** the power supply or distribution pillars (51, 53) are supported by a supporting frame (50), and **in that** a movable rack (55) to which the insulators (56) and the measuring transformer are fitted is provided in the frame (50) between the distributor and supply pillars (51, 53).

8. Module for an electrical transformer station according to Patent Claim 7, **characterized in that** the rack (55) is controlled (i) and can be displaced with respect to the frame (50) which holds the supply and distributor pillars (51).

9. Module for an electrical transformer station according to Patent Claim 1, **characterized in that** the module for the transformer station rests on the loading platform of a vehicle (100).

## Revendications

1. Groupe pour un poste de transformation électrique (1) constitué d'une unité ternaire formée de transformateurs de mesure (3), d'isolateurs (2, 4), de contacts de liaison (5), d'interrupteurs et d'isolateurs, les isolateurs (2, 4) étant prévus pour la liaison avec une ligne d'alimentation et une ligne de distribution, dans lequel à une extrémité d'un premier isolateur (2), qui reçoit par exemple une tige d'actionnement, est reçu un transformateur de mesure (3) auquel se raccorde un deuxième isolateur (4) qui est disposé à angle droit par rapport au premier isolateur (2) et qui contient la chambre de coupure.

2. Groupe pour un poste de transformation électrique selon la revendication 1, **caractérisé en ce que** l'unité ternaire est en liaison active avec les isolateurs (2, 4) disposés en angle, par une structure de soutien (6) qui peut être déplacée d'une position de repos (figure 2) à une position de travail (figure 1).

3. Groupe pour un poste de transformation électrique selon la revendication 1, **caractérisé en ce que** la structure de soutien reçoit des colonnes d'isolation et de distribution de courant (14, 15) qui sont montées dans la structure de soutien (13) de manière à pouvoir pivoter d'une position de travail à une position de repos.

4. Groupe pour un poste de transformation électrique selon la revendication 1, **caractérisé en ce que** les composants (2, 3, 4), qui forment le poste électrique (1), sont supportés par une plaque de base (20) qui est déplaçable vers le haut et vers le bas par rapport à une structure de soutien (23), le long de guides (21, 22).

5. Groupe pour un poste de transformation électrique selon la revendication 1, **caractérisé en ce que** les colonnes de distribution (24, 25) sont montées à l'aide d'axes qui permettent le pivotement des colonnes (24, 25) du haut vers le bas et inversement.

6. Groupe pour un poste de transformation électrique selon la revendication 1, **caractérisé en ce que** le pied de l'isolateur (2) est relié de manière articulée à la structure de soutien (10), de manière que l'isolateur (2), le transformateur (3) et l'isolateur (4) puissent pivoter par rapport à la structure (10).

7. Groupe pour un poste de transformation électrique selon la revendication 1, **caractérisé en ce que** les colonnes d'alimentation en courant ou de distribution (51, 53) sont supportées par un cadre de soutien (50) et **en ce que** dans le cadre (50), entre les colonnes de distribution et d'alimentation (51, 53), est prévu un châssis roulant (55) qui porte les isolateurs (56) ainsi que le transformateur de mesure.

8. Groupe pour un poste de transformation électrique selon la revendication 7, **caractérisé en ce que** le châssis roulant (55) est commandé (i) et déplaçable par rapport au cadre (50) qui reçoit les colonnes d'alimentation et de distribution (51).

9. Groupe pour un poste de transformation électrique selon la revendication 1, **caractérisé en ce que** le groupe pour le poste de transformation est placé sur la plateforme de chargement d'un véhicule (100).
